Europäisches Patentamt

(19) European Patent Office

Office européen des brevets

(11) Publication number: **0 171 851**
**A2**

(12) **EUROPEAN PATENT APPLICATION**

(21) Application number: **85201242.6**

(22) Date of filing: **26.07.85**

(51) Int. Cl.⁴: **B 65 G 47/14**

(30) Priority: **13.08.84 IT 2231884**

(43) Date of publication of application:
**19.02.86 Bulletin 86/8**

(84) Designated Contracting States:
**AT BE CH DE FR GB LI LU NL SE**

(71) Applicant: **F.lli CUCCHI S.r.l.**
**Via Genova, 4**
**I-20060 Bussero Milano(IT)**

(72) Inventor: **Cucchi, Giovanni**
**Via Genova, 4**
**I-20060 Bussero (Milano)(IT)**

(72) Inventor: **Cucchi, Pietro**
**Via Genova, 4**
**I-20060 Bussero (Milano)(IT)**

(74) Representative: **Faraggiana, Vittorio, Dr. Ing. et al,**
**Ingg. Guzzi e Ravizza S.r.l. Via Boccaccio, 24**
**I-20123 Milano(IT)**

(54) **Equipment for withdrawing one bar out of a store collecting bars in bulk intended in particular for feeding a machine tool.**

(57) An equipment for withdrawing one bar from a store collecting bars in bulk, which bar is intended in particular for feeding a machine tool, includes over said store a longitudinal guide displaceable both vertically and horizontally in mutually perpendicular planes; a pliers for grasping said is fixed to one end of said guide and a device for separating said bar is slidable along the guide to complete the separation of the bar grasped by said pliers from the bars remaining in the collecting store.

./...

Fig. 2

EQUIPMENT FOR WITHDRAWING ONE BAR OUT OF A STORE COLLECTING BARS IN BULK INTENDED IN PARTICULAR FOR FEEDING A MACHINE TOOL

It is known to withdraw one bar at a time from a store containing a plurality of bars gathered in bulk, for example but not exclusively, for automatically feeding a machine tool, such as a multi-spindle lathe.

In fact the bars, which can be unloaded directly in the store from transport means, are crossing each other so as to make practically impossible to grasp them by mechanical means before having ordered them, for example causing the bars to go out of the store one at a time.

It has been proposed, for example, to provide a reservoir with flexible walls which are drawn one toward the other in order to cause the bars to overflow one at a time with order and therefore to fall on a collecting conveyor. Such task of arranging the bars to lay to rest on a plane is however remarkably time consuming and undesirably costly, also due to the onerous use of auxiliary equipments. The difficulties of withdrawing single bars can be even greater with particular shapes and sizes of the cross section of the bars.

The object of the present invention is to solve the above problem by providing an equipment suitable for withdrawing from a store collecting bars in bulk a bar at a time without any need that the bars by costly auxiliary means be previously orderly arranged, this result being obtained for any shape and/or size of the bars, also for bars of small cross section which most likely tend to overlap and cross each other inordinately, and with more difficulty can be ordinately withdrawn from a store.

With the above aim, according to the invention, it has been devised to provide an equipment for withdrawing , from a store intended for in-bulk collection, one bar to be carried singularly to a receiving station, characterized in that said equipment comprises a vertically displaceable longitudinal guide, a grasping pliers for said bar mounted on one end of said guide and a device for separating said bar, said separating device being slidable along said guide and including a hook member displaceable between a non-operative position raised and disengaged from the bar which is grasped by said pliers and a generally vertical operative position in engagement with the lower zone of said bar.

The constructional and operational characteristics of the invention and the attendant advantages will be even more evident from the detailed description given hereinafter with reference to the figures of the accompanying drawings which illustrate possible practical embodiments of the invention. In the drawings:

Fig. 1 is a longitudinal sectional view showing a first embodiment of the invention, taken along the line I-I of Fig. 2;

Fig. 2 is a cross-sectional view taken along the line II-II of Fig. 1, showing the pliers lowered inside the store in the position corresponding to the grasping of one bar;

Fig. 3 is a view as Fig. 2 but illustrating the pliers raised in the position of deposition of said bar on a receiving means;

Fig. 4 is a sectional view taken along the line IV-IV of Fig. 5;

Fig. 5 is a sectional view taken along the line V-V of Fig. 4;

Fig. 6 and Fig. 7 show details of the device which draws the bars and cooperates with the pliers;

Fig. 8 shows a detail for illustrating the bar lifting step;

Fig. 9 shows an alternative of the invention, and

Fig. 10 and Fig. 11 are alternatives of the pliers.

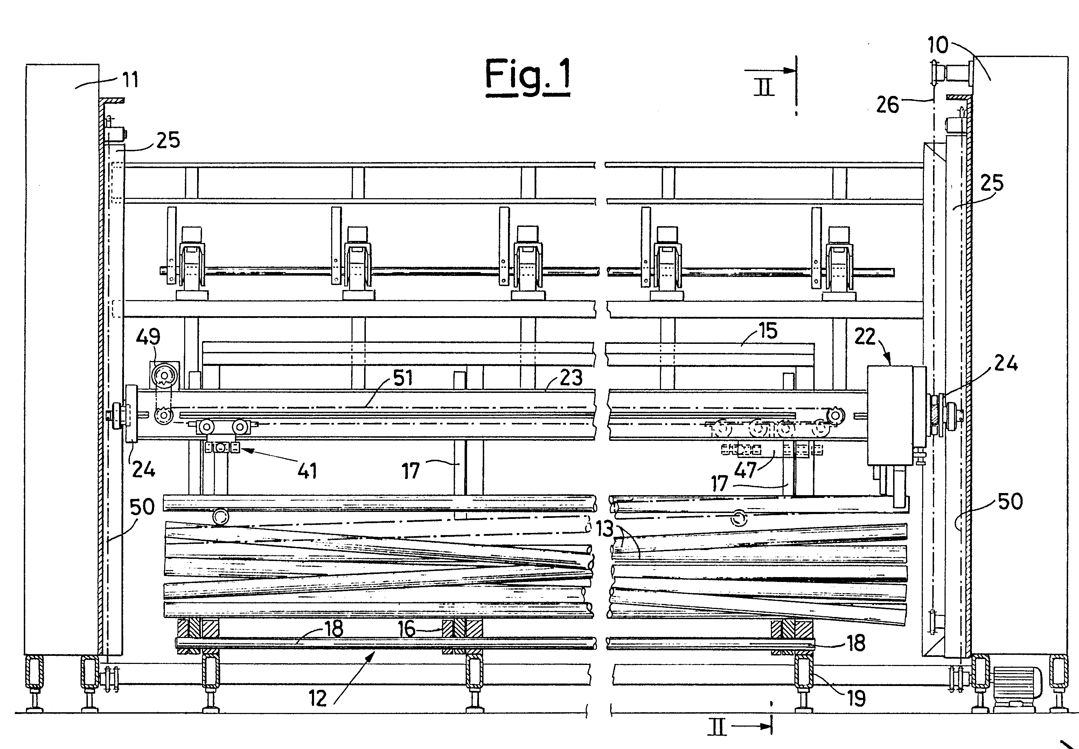

With reference to Fig. 1 to 7 of the drawings, the equipment of the invention is constructionally comprised of a frame including two end heads 10, 11 stiffly interconnected by a plurality of longitudinal members and cross members. A reservoir store 12 is provided between said heads 10, 11 for collecting in bulk a plurality of bars 13 which are given a continuous settling movement to seek to form a pile as ordered as possible. More precisely, said store 12 can be comprised of a rack formed by a plurality of mutually spaced parallel supports having generally a configuration with a "U" shape and carried by a frame 15. Said supports include each a pair of bottom arms 16 which support the most part of the load caused by the bars and a pair of side arms 17 which do the task of a container. Said arms 16, 17, in addition to the supporting task, also do the task to shake continuously the bulk of the bars; to this end the arms 16 are mutually articulated at one end by means of a single central axis 18 supported by base cross members 19 which are part of said frame 15;

at the other end the arms 16 are journalled in 20 to one end of the arms 17, the opposite ends of which are provided with seats for rotation of respective eccentrics 21.

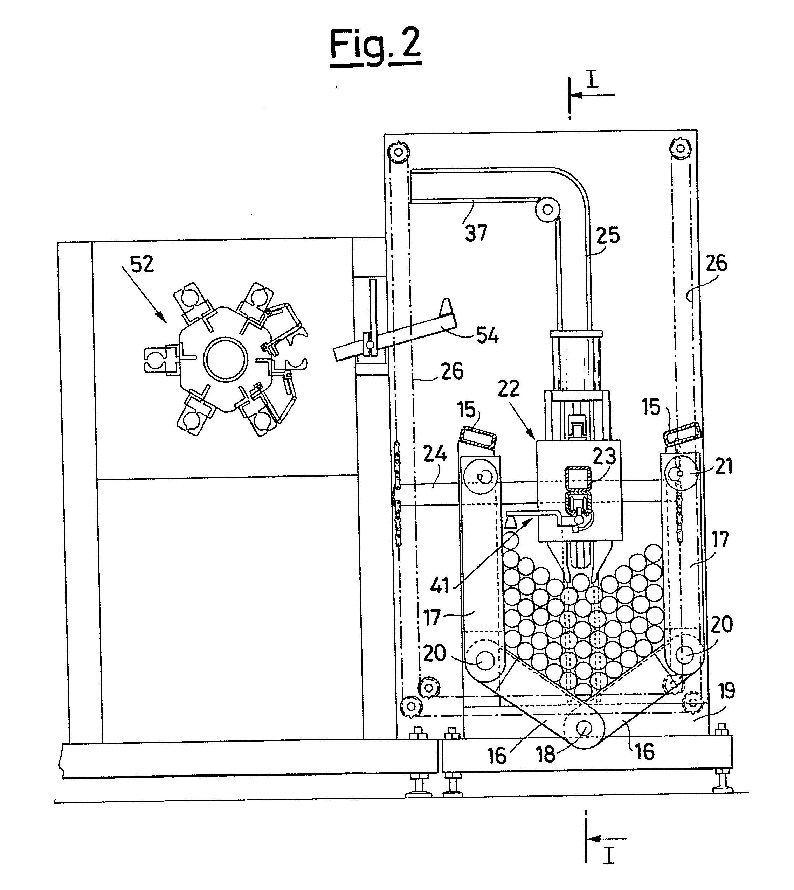

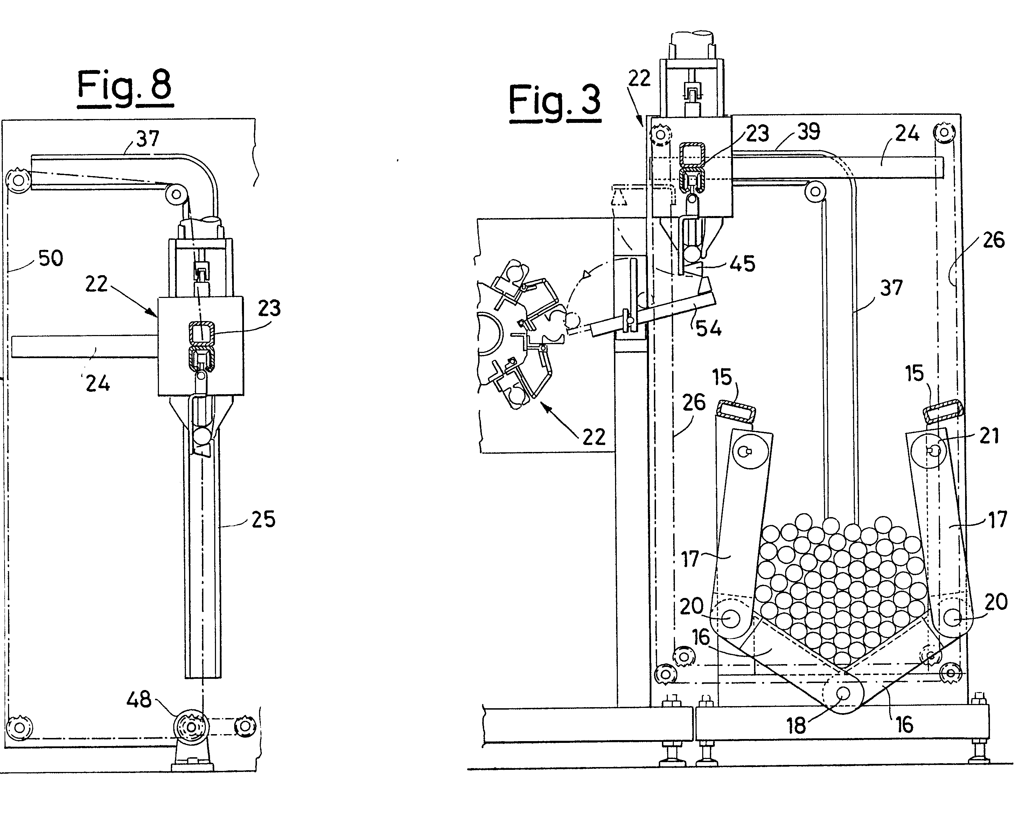

In this manner the supports are continuously moving between the positions illustrated in Fig. 2 and Fig. 3 of the drawings, thus co-acting for the settling of the bars and consequently the withdrawal of said bars which is accomplished in the manner described hereinafter.

Over the above described store 12 there is supported the equipment of this invention; said equipment is comprised of pliers generally designated by the reference numeral 22; Said plier 22 is fixed to one end of a longitudinal guide 23 slidably carried by end cross members 24 which are vertically movable on guides 25 mounted on the heads 10, 11 of the frame. To this end the cross members 24 are restrained to respective support chains 26; the closed loop path of said chains around transmission sprocket wheels is clearly illustrated in the drawings, particularly in Fig. 2. Said chains 26 maintain the horizontal arrangement of the cross members 24, thus permitting said members a vertical movement.

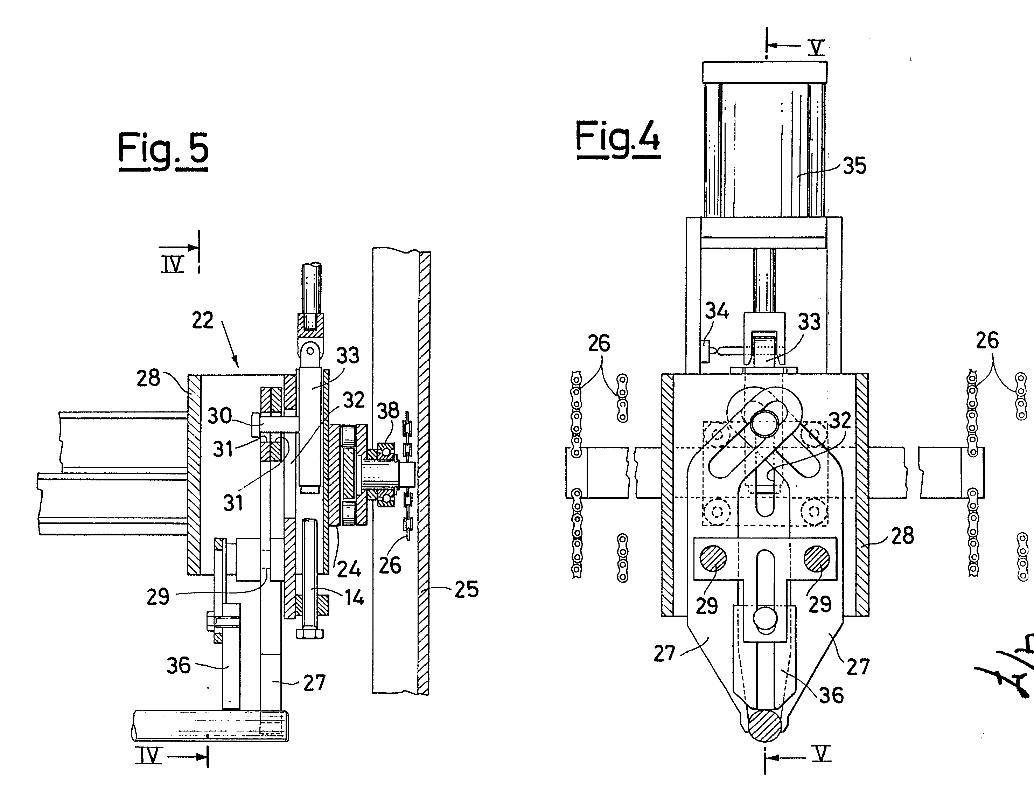

The pliers 22 is constructionally comprised of a pair of jaws 27 protruding downwardly from a member 28, the pliers being journalled in 29 on said member 28. As clearly seen in Fig. 4 and Fig. 5 of the drawings, the aperture and closure movements of said jaws are obtained by means of a device comprising a slotted link and slider, including a central pin 30 fitted in a pair of slots provided in the opposite end of the jaws 27. The pin 30 extends radially from an actuating rod 33 and is guided within a slot 32 provided in the member 28 to slide vertically, downwardly and upwardly, to cause the opening and closing movement, respectively, of the pliers. The reference numeral 14 designates a limit stop with an adjustable position which co-acts with rod 33 to establish the opening extent of the pliers. Also a sensor, schematically designated by the reference numeral 34 only indicatively, cooperates with said rod 33 and is responsive to the grasping of one bar by the pliers, then to the stopping of the closure movement of the jaws in a predetermined position corresponding to the bar diameter, and gives consent to the following lifting operation of the bar.

The reference numeral 35 designates the cylinder for controlling the rod 33 and the reference numeral 36 designates an abutment member having an adjustable position which avoids the inlet of more than one bar at a time between the jaws of the pliers.

In Fig. 2, 3 and 5 there is shown the manner in which each cross member 24 is guided during its vertical translation movement by means of a central guide 25 having a "U" shaped cross section, a ball bearing 38 mounted on the cross member 24 being engaged within the central guide 25. The guide 25 extends further upward in a generally horizontal length 37 which guides the pliers along a correspondingly oriented path which determines the translation movement along the corresponding cross member 24 of ball bearings 40.

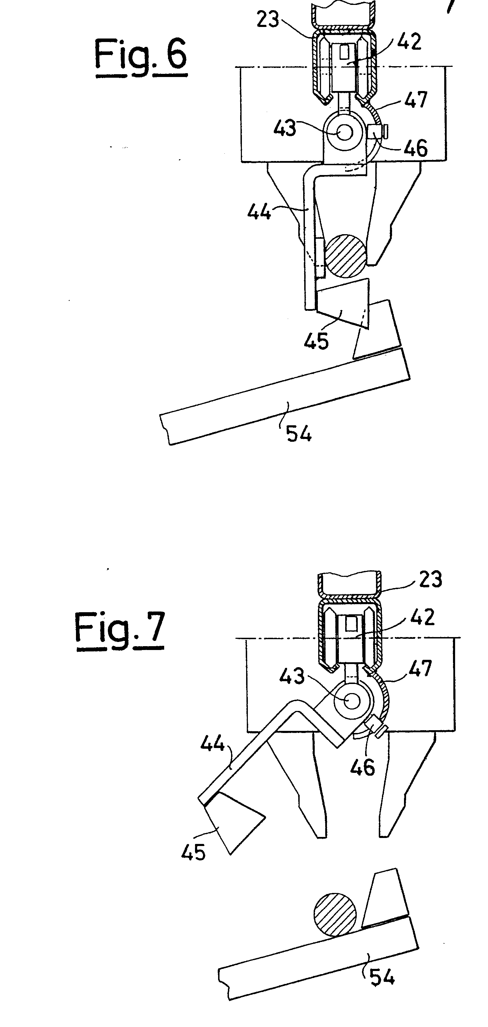

According to the present invention, a device 41 cooperates with the pliers 22, said device being provided to complete the separation of the bars and to slide along the guide 23, and it is best illustrated in Fig. 6 and Fig. 7.

Said separator device 41 is comprised of a carriage 42 to which it is journalled in 43 a kind of hook including a rod 44 to the free end of which is radially journalled a tapered roller 45. The separator 41 is maintained by gravity in the lower position depicted in Fig. 6, whereas the raised position of Fig. 5 is reached by means of the engagement of a cam follower 46 fastened to the separator with a cam profile 47 fastened to the longitudinal guide 23, near the pliers 22.

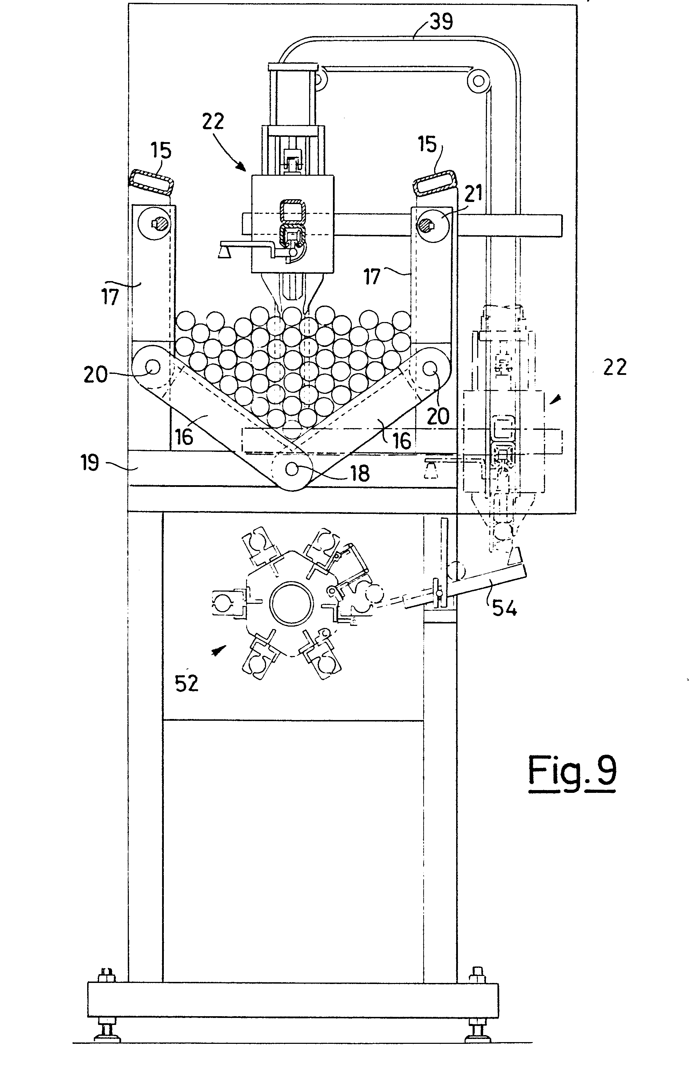

The equipment is provided with two power units 48, 49. The power unit 48 causes the movements of the whole assembly of the pliers 22 by means of a pair of chain loops 50, the path and arrangement of which are clearly diagrammatically illustrated in Fig. 8, each loop being located at one end of the longitudinal guide 23. The two chain loops 50 are kinematically interconnected to move synchronously by transmission means (not shown for sake of drawing clarity). The power unit 49 causes the translation movements of the separator 41, also in this case by means of a driving chain 51 looping around transmission sprocket wheels (Fig. 1).

The operation of the equipment according to the invention is as follows.

While the bars are agitating within the store 12, the pliers 22 is continously lowered, closed, reopened and lifted until the sensor 34 detects the grasping of one bar (Fig. 2).

With the pliers raised up to the position shown in Fig. 1 and Fig. 8, the grasped bar is in the slanted condition depicted by dot-dash lines and must be completely withdrawn from the horizontally arranged pile so as to be transported and fed automatically to the machine tool.

The separator 41 operates at this point of the operating cycle, and starting to move leftwards in Fig. 1 gets rid of the action of the cam 47 and moves towards the operating lower position with the roller 45 under the bar. The continuous translation movement of separator 41 toward the end position depicted by solid lines in Fig. 1 causes a complete withdrawal of the bar out the underlying bar heap, and further causes the bar to be laid generally horizontally, as depicted by solid lines in Fig. 1.

The cross members 24 are now lifted up to the position shown in Fig. 3, and together with said members the whole pliers assembly is lifted so as to carry the grasped bar above, for example, chute arms 54 which are known and are suitable for feeding the bars to an apparatus 52 for feeding them to the machine tool. The bar in question is placed quietly on the chute arms 54, starting from one end, simply by transporting the separator 41 back to the starting position, near pliers 22, which pliers is then reopened to let drop eventually the bar on the chute.

At this point of the operating cycle the whole equipment is repositioned in the starting condition, ready for beginning a new operating cycle.

To the constructional embodiment as above described and illustrated in Fig. 1-8 of the drawings, a person skilled in the art can make many variations in order to obtain an equipment suitable for his particular needs.

For example, it is advantageous that the pliers, after completion of its lifting vertical movement, performs an horizontal stroke, so as to clear the entrance of the store thus making easier its loading. However the guide of the pliers can go on beyond the horizontal path 37 to determine as adequately as possible the position the bar is placed on.

In Fig. 9 there is schematically illustrated the manner in which the guide can move a further vertically downward distance 39 to deposit the bar on a bar feeder placed below the withdrawing equipment according to the invention.

Also the constructional parts of the equipment can have different configurations in order to fulfil specific applications.

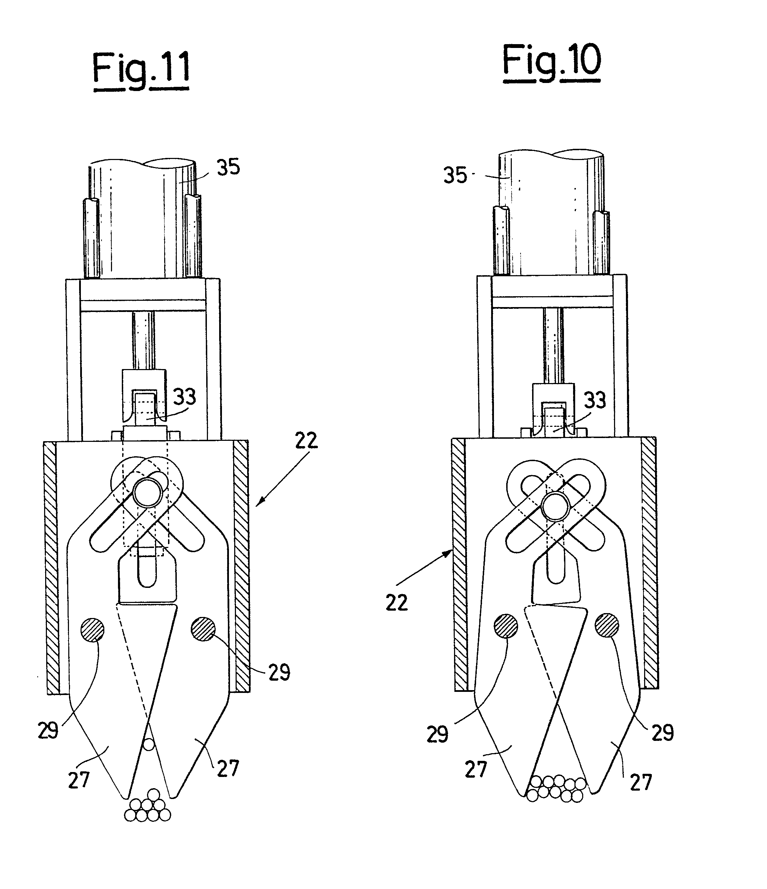

If the equipment is intended particularly for withdrawing bars having relatively small cross section, the jaws 27 can have a configuration as illustrated in Fig. 10 and Fig. 11; in particular the grasping surfaces have an orientation such as to form between said surfaces and the bar an angle equal to the angle of friction during the closure of the jaw. In such a way the most internal bar is grasped whereas the excess bars entered are dropped as clearly shown in the drawings. Such a configuration of pliers with acute jaws has the advantage that it permits to easily penetrate among constipated bars having relatively small cross section of any shape.

CLAIMS

1. An equipment for withdrawing a bar out of a store collecting bars in bulk, said bar being intended for being transported singularly to a receiving station, characterized in that said equipment is comprised of a vertically movable longitudinal guide, which guide is mounted above said store, a grasping pliers for said bar mounted on one end of said guide and a separating device for said bar slidable along said guide and including a hook member displaceable between a non-operative position raised and disengaged from said bar which is grasped by said pliers and a generally vertical operative position in engagement with the lower zone of said bar.

2. An equipment according to claim 1, characterized in that said guide is movable both vertically and horizontally on mutually orthogonal planes.

3. An equipment according to claim 1, characterized in that said longitudinal guide is slidably mounted on end cross members, said cross members being slidable on guides which are part of the equipment frame.

4. An equipment according to claim 3, characterized in that said cross members are restrained to chains for support and movement, said chains being looped around transmission sprocket wheels.

5. An equipment according to claim 1, characterized in that said pliers is comprised of a pair of jaws, said jaws being opened and closed by means of a device comprising a slotted link and a slider, a sensor for detecting the grasping of a bar cooperating with said pliers.

6. An equipment according to claim 1, characterized in that said hook member comprises a tapered roller pivoted to the free end of a rod, the other end of which is pivoted to a carriage slidable on said guide.

7. An equipment according to claim 1, characterized in that said hook member carries a cam follower cooperating with a cam profile of the guide to be positively displaced to the non-operative horizontal position from the operative vertical position maintained by gravity.

8. An equipment according to claim 1, characterized in that said store comprises a rack formed by a plurality of mutually spaced parallel supports having a generally "U" shaped configuration, each of said supports including mutually articulated arms which perform an oscillatory movement.

# Fig.1

0171851 1/4

# Fig.2

0171851

3/7

Fig.8

Fig.3

# Fig.5

# Fig.4

22

28

30

31

31

33

32

38

29

36

27

26

24

14

25

35

34

33

26

26

32

28

29

29

27

27

36

26

0171851

Fig. 6

23

42

47

43

46

44

45

54

Fig. 7

23

42

47

43

46

44

45

54

**Fig.9**

0171851

# Fig.11

# Fig.10